(19) Europäisches Patentamt
European Patent Office
Office européen des brevets

(11) EP 0 650 791 B1

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int. Cl.$^6$: **B22F 9/28**, C22C 1/04

(21) Anmeldenummer: **94116634.0**

(22) Anmeldetag: **21.10.1994**

(54) **Feinteilige Metall-, Legierungs- und Metallverbindungspulver**

Fine particles of metals, alloys and metal compounds

Particules fines de métals, d'alliages et de composés métalliques

(84) Benannte Vertragsstaaten:
**DE FR GB NL SE**

(30) Priorität: **02.11.1993 DE 4337336**

(43) Veröffentlichungstag der Anmeldung:
**03.05.1995 Patentblatt 1995/18**

(73) Patentinhaber: **H.C. Starck GmbH & Co. KG**
**D-38642 Goslar (DE)**

(72) Erfinder:
• **König, Theo, Dr.**
**D-79725 Laufenburg (DE)**

• **Fister, Dietmar, Dr.**
**D-79730 Murg (DE)**

(74) Vertreter: **Steiling, Lothar, Dr. et al**
**Bayer AG**
**Konzernzentrale RP**
**Patente Konzern**
**51368 Leverkusen (DE)**

(56) Entgegenhaltungen:
EP-A- 0 151 490          EP-A- 0 152 957
DE-A- 3 536 933          DE-A- 4 214 722
DE-A- 4 214 723          GB-A-  919 954
GB-A-  950 148           US-A- 4 642 207
US-A- 4 994 107

## Beschreibung

Die vorliegende Erfindung betrifft feinteilige Metallverbindungspulver MeX, wobei

Me = Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd und

X = C, N, B, Si, Se, Te, P, O und S oder Kombinationen daraus, mit Ausnahme von AlN und $Al_2O_3$, bedeutet.

Feinteilige Pulver obiger Zusammensetzungskombinationen gewinnen zunehmend an technischer Bedeutung. Zum Beispiel lassen sich Spiegel durch Aufbringen von Suspensionen aus solchem feinteiligen Metallpulver auf einer Unterlage herstellen.

Zur technischen Herstellung von feinen Metall- und Metallverbindungspulvern sind zahlreiche Verfahren bekannt geworden.

Neben den rein mechanischen Zerkleinerungs- und Klassierverfahren, die den Nachteil haben, daß nur Pulver bis zu einer bestimmten Feinheit und mit relativ breiter Kornverteilung herstellbar sind, wurden auch eine Vielzahl von Verfahren zur Abscheidung aus der Gasphase vorgeschlagen.

Durch zum Teil sehr kleine Energiequellen, wie z.B. thermisches Plasma oder Laserstrahl, oder bei turbulenten Flammen, wie z.B. einem Chlorknallgasbrenner, ist die Kornverteilung und Korngröße der hergestellten Pulver nicht exakt steuerbar, und üblicherweise führen die Reaktionsbedingungen zu einer breiten Kornverteilung sowie zum Auftreten von Einzelteilchen, deren Durchmesser ein Vielfaches der Durchschnittskorngröße beträgt.

Nach dem derzeit bekannt gewordenen großtechnischen Pulverherstellungsverfahren ist es kaum oder nur sehr schwer möglich, Pulver mit Durchschnittskorngrößen von < 0,5 μm, gemessen nach FSSS (und nicht Einzelteilchengröße), herzustellen. Bei diesen konventionell hergestellten feinen Pulvern läßt es sich praktisch nicht ausschließen, daß ein gewisser Prozentsatz an Grobkorn im Material enthalten ist, der sich schädlich auf die mechanischen Eigenschaften daraus hergestellter Bauteile auswirkt. Auch erhält man bei herkömmlichen Mahlverfahren eine sehr breite Kornverteilung, die bei diesen Pulvern auch nicht durch Sichtschritte wesentlich eingeengt werden kann.

Bisher bekannt gewordene Verfahren zur Herstellung von Feinstpulvern über die Gasphase arbeiten zum Teil zweistufig, wobei die zweite Stufe dazu dient, das mehr oder weniger amorphe Zwischenprodukt in kristalline Form überzuführen und unerwünschte Nebenprodukte aus der Reaktion abzutrennen.

Andere Gasphasenverfahren arbeiten nicht mit einem strömungstechnisch optimierten Heißwandreaktor, sondern verwenden zur Umsetzung eine Plasmaflamme oder andere Energieträger wie Laserstrahlen.

Nachteile dieser Verfahren sind im wesentlichen die in der Praxis nicht kontrollierbaren Reaktionsbedingungen in verschiedenen Bereichen der Reaktionszone mit sehr großen Temperaturgradienten und/oder turbulenten Strömungen. Dadurch entstehen Pulver mit breiter Kornverteilung.

Es sind zahlreiche Vorschläge für Verfahren zur Herstellung von Feinsthartstoffpulvern gemacht worden, die aber alle mit Nachteilen behaftet sind. So weist auch das in der US-A 4.994.107 offenbarte Verfahren, in dem ein Rohrreaktor zur Herstellung gleichmäßiger, nicht agglomerierter Pulver beschrieben wird, erhebliche Nachteile für die Praxis auf. Wegen der Mischung aller Reaktionspartner vor der heißen Zone findet kein definierter Beginn der Keimbildungsreaktion statt. Auch können Wandreaktionen nicht verhindert werden. Dadurch erhöht sich die Gefahr, daß große Teilchen in das sonst feine Pulver gelangen und nicht mehr entfernt werden können.

Die EP-A 0 379 910 beschreibt ein Zweistufenverfahren zur Herstellung von $Si_3N_4$ aus der Gasphase, bei dem das Ausgangshalogenid flüssig über eine Zweistoffdüse in den Reaktorraum eingeblasen wird. Auch nach diesem Verfahren ist die Bereitstellung eines befriedigenden Pulvers nicht möglich.

Andere Vorschläge zur Herstellung von sehr feinen gleichmäßigen Pulvern sind die Umsetzung in Unterdruck, aber auch verschiedene Sol-Gel-Verfahren. Auch diese Vorschläge weisen Nachteile, wie Mehrstufigkeit, schlechte Steuerbarkeit der Korngröße, Kornverteilung und Chargenbetrieb, auf.

Auch die vorgeschlagenen Plasma-, Laser- oder Explosionsverfahren (EP-A 0 152 957, EP-A 0 151 490) weisen die genannten Nachteile auf.

Auch die Herstellung von feinen Pulvern durch speziell geführte magnesiothermische Umsetzung der entsprechenden Metallchloride zur Herstellung von z.B. TiN oder TiC erreicht nicht die Feinheit und Gleichmäßigkeit der nach dem vorgeschlagenen Verfahren hergestellten Pulver (G. W. Elger, Met, Transactions 20 B, 8, 1989, S. 493-497).

Ebenso entsprechen die in US-A 4 642 207, US-A 4 689 075, EP-A 152 957 und EP-A 151 490 offenbarten Verfahren, die das Verdampfen von Metall durch Lichtbogen- oder Elektronenstrahl sowie Reaktion gasförmiger Reaktionspartner in einer Glimmentladung betreffen nicht den Anforderungen an ein unter wirtschaftlichen Gesichtspunkten zu betreibendes Verfahren zur Herstellung von sehr gleichmäßigen und sehr feinen Pulvern.

Aus der DE-A 3 536 933 sind amorphe $Si_3N_4$-Pulver mit einer Korngröße von 0,1 bis 1 μm und kristalline $Si_3N_4$-Pulver mit Korngrößen von 0,15 bis 1,0 μm bekannt. In der DE-A 3 833 382 werden AlN-Pulver mit kleinsten Korngrößen von etwa 0,3 μm beschrieben.

Auf der Suche nach Werkstoffen aus Metallen und Metallverbindungen mit verbesserten mechanischen, elektrischen, optischen und magnetischen Eigenschaften werden immer feinere Pulver verlangt.

Nach dem Edelgaskondensationsverfahren ist zuvor die Herstellung feinster Pulver im Nanometer-Bereich möglich. Hierbei können allerdings nur Mengen im Milligramm-Bereich hergestellt werden. Auch fallen sie nicht in enger Teilchengrößenverteilung an.

Aufgabe dieser Erfindung ist somit die Bereitstellung von Metallverbindungspulvern, welche die beschriebenen Nachteile der Metallverbindungspulver des Standes der Technik nicht aufweisen.

Es wurden nun Pulver gefunden, welche diese Forderungen erfüllen. Diese Pulver sind Gegenstand dieser Erfindung.

Gegenstand dieser Erfindung sind somit feinteilige Metallverbindungspulver MeX, wobei

Me = Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd und
X = C, N, B, Si, Se, Te, P, O und S oder Kombinationen daraus, mit Ausnahme von AlN und $Al_2O_3$,

wobei sie eine Partikelgröße zwischen 1,0 nm und 1000 nm aufweisen und weniger als 1 % der Einzelpartikel eine Abweichung von mehr als 40 % und keine Einzelpartikel eine Abweichung von mehr als 60 % von der mittleren Korngröße aufweisen.

Bevorzugt weisen weniger als 1 % der Einzelpartikel eine Abweichung von mehr als 20 % und keine Einzelpartikel eine Abweichung von mehr als 50 % von der mittleren Korngröße auf, besonders weisen weniger als 1 % der Einzelpartikel eine Abweichung von mehr als 10 % und keine Einzelpartikel eine Abweichung von mehr als 40 % von der mittleren Korngröße auf.

Bevorzugte Metallverbindungspulver sind: $Ga_xIn_yN_z$, PbSe, $Al_xGa_yP$. Die erfindungsgemäßen Pulver weisen eine hohe Reinheit und eine extrem enge Partikelgrößenverteilung auf.

Der Sauerstoffgehalt von Nichtoxiden beträgt bevorzugt weniger als 5000 ppm, besonders bevorzugt weniger als 1000 ppm. Besonders reine erfindungsgemäße Pulver sind dadurch gekennzeichnet, daß sie einen Sauerstoffgehalt von weniger als 100 ppm, bevorzugt weniger als 50 ppm, aufweisen.

Auch die nichtoxidischen Verunreinigungen sind sehr gering. So beträgt bevorzugt die Summe ihrer Verunreinigungen, mit Ausnahme der oxidischen Verunreinigungen, kleiner als 5.000 ppm, besonders bevorzugt kleiner als 1.000 ppm.

In einer ganz bevorzugten Ausführungsform beträgt die Summe ihrer Verunreinigungen, mit Ausnahme der oxidischen Verunreinigungen, kleiner als 200 ppm.

Die erfindungsgemäßen Pulver sind im technischen Maßstab erhältlich und liegen somit bevorzugt in Mengen von mehr als 1 kg vor.

Die erfindungsgemäßen Pulver sind erhältlich in einem Verfahren zur Herstellung feinteiliger Keramikpulver durch Reaktion entsprechender Metallverbindungen und entsprechender Reaktionspartner in der Gasphase -CVR-, wobei die Metallverbindung(en) und die weiteren Reaktionspartner in einem Reaktor im gasförmigen Zustand zur Reaktion gebracht, direkt aus der Gasphase homogen unter Ausschluß jeglicher Wandreaktion auskondensiert und anschließend vom Reaktionsmedium abgetrennt werden, welches dadurch gekennzeichnet ist, daß die Metallverbindungen und die Reaktionspartner getrennt voneinander mindestens mit Reaktionstemperatur in den Reaktor eingebracht werden. Für den Fall, daß mehrere Metallverbindungen und/oder Reaktionspartner eingebracht werden sollen, sind die jeweiligen Gasmischungen so zu wählen, daß während des Aufheizens keine Reaktion auftritt, die zu festen Reaktionsprodukten führt. Besonders vorteilhaft läßt sich dieses Verfahren in einem Rohrreaktor durchführen. Es ist besonders günstig, wenn die Metallverbindungen, die Reaktionspartner und die Produktpartikel den Reaktor laminar durchströmen.

Durch das getrennte Vorerhitzen der Prozeßgase auf mindestens Reaktionstemperatur (bei Zersetzungsreaktionen der Metallkomponente wird die Temperatur dieses Eduktstromes so gewählt, daß vor Eintritt in den Reaktor keine Feststoffe entstehen) läßt sich der Ort der Keimbildung eingrenzen. Die laminare Strömung im Reaktor stellt eine enge Verweilzeitverteilung der Keime bzw. der Partikel sicher. Auf diese Weise läßt sich eine sehr enge Korngrößenverteilung erreichen.

Bevorzugt sollten somit die Metallverbindungen und die Reaktionspartner als koaxiale laminare Teilströme in den Reaktor eingebracht werden.

Um jedoch die Durchmischung der beiden koaxialen Teilströme sicherzustellen, wird durch Einbau eines Störkörpers in der sonst streng laminaren Strömung eine in Intensität und Aufweitung definierte Karman'sche Wirbelstraße erzeugt.

Eine bevorzugte Ausführungsform dieses Verfahrens besteht also darin, daß die koaxialen, laminaren Teilströme der Metallverbindung(en) und der Reaktionspartner mittels einer Karman'schen Wirbelstraße in definierter Weise vermischt werden.

Um die energetisch stark bevorzugte Abscheidung der Reaktionsteilnehmer an der Reaktorwand zu verhindern, wird bevorzugt das Reaktonsmedium von der Reaktionswand durch eine Inertgasschicht abgeschirmt. Dies kann dadurch erfolgen, daß durch speziell geformte Ringspalte in der Reaktorwand ein Inertgasstrom eingebracht wird, der über den Coandaeffekt an der Reaktorwand anliegt. Die im Reaktor durch eine homogene Abscheidung aus der Gasphase bei typischen Verweilzeiten zwischen 10 und 300 msec entstandenen Partikel verlassen diesen gemeinsam mit den gasförmigen Reaktionsprodukten (z.B. HCl), den nicht umgesetzten Reaktanten und den Inertgasen, die als Trägergas, Spülgas und zum Zwecke der Verminderung der HCl-Adsorption eingeblasen werden. Nach dem erfindungsgemäßen Verfahren sind Ausbeuten, bezogen auf die Metallkomponente, von bis zu 100 % erzielbar.

Vorzugsweise wird dann die Abtrennung der Metall-, Legierungs- oder Keramikpulver bei Temperaturen oberhalb der Siede- bzw. Sublimationstemperaturen der eingesetzten Metallverbindungen, Reaktionspartner und/oder während der Reaktion gebildeten Zwangsanfallsprodukte vorgenommen. Die Abtrennung kann dabei vorteilhaft in einem Rückblasfilter vorgenommen werden. Wenn dieser bei hohen Temperaturen von z.B. 600°C betrieben wird, kann die Adsorption der Gase, insbesondere der nicht inerten Gase wie HCl, $NH_3$, $GaCl_3$, usw., an der sehr großen Oberflache der Keramik-, Legierungs- oder Metallpulver gering gehalten werden. Insbesondere wird bei der Herstellung von Nitriden die Bildung von $NH_4Cl$ verhindert (größer als 350°C).

Die noch verbliebenen, an der Pulveroberflächen adsorbierten störenden Substanzen können in einem nachgeschalteten Vakuumbehälter weiter entfernt werden, vorzugsweise wieder bei Temperaturen von ca. 600°C. Die fertigen Pulver sollten dann unter Luftausschluß aus der Anlage ausgetragen werden.

Bevorzugte Metallverbindungen im Sinne dieser Erfindung sind eine oder mehrere aus der Gruppe Metallhalogenide, teilweise hydrierte Metallhalogenide, Metallhydride, Metallalkoholate, Metallalkyle, Metallamide, Metallazide, Metallboranate und Metallcarbonyle.

Bevorzugte weitere Reaktionspartner sind einer oder mehrere aus der Gruppe $H_2$, $NH_3$, Hydrazin, Amine, $CH_4$, andere Alkane, Alkene, Alkine, Aryle, $O_2$, Luft, $BCl_3$, Borsäureester, Borane, $SiCl_4$, andere Chlorsilane und Silane.

Die erfindungsgemäßen Pulver können nano- oder mikrodisperse (kristallin oder amorph) Metallverbindungspulver sein, wobei bevorzugte Pulver, Carbide, Nitride, Boride, Silizide, Phosphite, Sulfide, Oxide, Selenide, Telluride und/oder Kombinationen daraus der Elemente Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd oder diese Elemente alleine oder in Kombination miteinander sind.

Es ist möglich, nach diesem Verfahren Pulver mit einer einstellbaren Partikelgröße zwischen 1 und 1000 nm (1 μm) herzustellen, die eine extrem enge Teilchengrößenverteilung aufweisen. Charakteristisch für die erfindungsgemäßen Teilchen ist das vollständige Fehlen von Partikeln, die wesentlich größer als die Durchschnittskorngröße sind.

Weitere Charakteristika der Pulver sind ihre hohe Reinheit, hohe Oberflächenreinheit und gute Reproduzierbarkeit.

Je nach Korngröße und Stoff können die erfindungsgemäßen Pulver sehr luftempfindlich bis pyrophor sein. Um diese Eigenschaft zu beseitigen, können diese Pulver in defenierter Weise durch Beaufschlagen mit Gas/Dampfgemischen oberflächenmodifiziert werden.

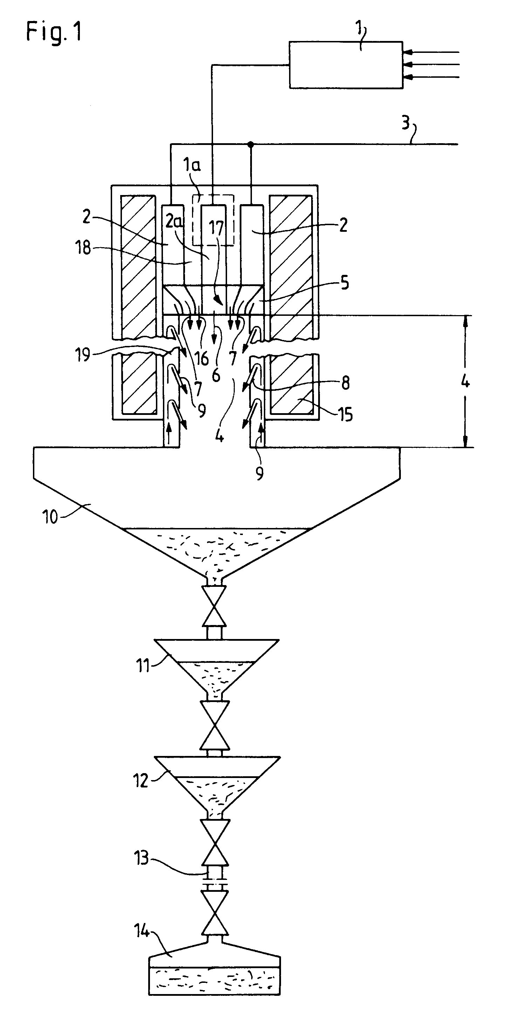

Fig. 1 ist die schematische Darstellung einer Vorrichtung, mit der dieses Verfahren durchführbar ist. Anhand der Fig. 1 wird im folgenden die Durchführung dieses Verfahrens erläutert. Die dabei explizit genannten Verfahrens-, Stoff-und/oder Vorrichtungsparameter stellen dabei nur ausgewählte Möglichkeiten von vielen dar und schränken somit die Erfindung nicht ein.

Die festen, flüssigen oder gasförmigen Metallverbindungen werden in einen außerhalb angebrachten Verdampfer (1) oder einen innerhalb des Hochtemperaturofens angebrachten Verdampfer (1a) dosiert, dort bei Temperaturen von 200°C bis 2000°C verdampft und mit einem inerten Trägergas ($N_2$, Ar oder He) in den Gasvorerhitzer (2a) transportiert. Die weiteren Reaktionspartner (3) wie $H_2$, $NH_3$ und $CH_4$ werden ebenfalls in einem Gasvorwärmer (2) erhitzt. Vor Eintritt in den Rohrreaktor (4) werden die aus den Gasvorwärmern (2) austretenden turbulenten Einzelstromfäden in einer Düse (5) zu zwei koaxialen, laminaren und rotationssysmmetrischen Stromfäden geformt.

Im Rohrreaktor (4) durchmischen sich der mittlere Stromfaden (6), der die Metallkomponente enthält, und der umhüllende Stromfaden (7), der die restlichen Reaktionspartner enthält, unter definierten Bedingungen. Dabei tritt die Reaktion bei Temperaturen zwischen 500°C und 2000°C z.B. gemäß folgenden Fallbeispielen ein:

$$GaCl_3 + NH_3 \rightarrow GaN + 3\ HCl$$

$$InCl_3 + NH_3 \rightarrow InN + 3\ HCl$$

$$PbI_2 + SeCl_4 + 3H_2 \rightarrow PbSe + 4\ HCl + 2\ HI$$

Um die Durchmischung der beiden koaxialen Stromfäden sicherzustellen, kann durch Einbau eines Störkörpers (17) in der ansonsten streng laminaren Strömung eine Karman'sche Wirbelstraße erzeugt werden. Die beiden koaxialen Stromfäden werden am Düsenaustritt durch einen schwachen Inertgasstrom (16) getrennt, um Anwachsungen an der Düse (5) zu verhindern.

Um die energetisch stark bevorzugte heterogene Abscheidung dieser Stoffe an der heißen Reaktorwand zu unterbinden, wird diese durch Ringspalte (8) hindurch mit einem Inertgasstrom (9) ($N_2$, Ar oder He), der über den Coandaeffekt an der Reaktorwand anliegt, gespült. Die im Reaktor durch eine homogene Abscheidung aus der Gasphase entstandenen Keramikpulverpartikel verlassen diesen gemeinsam mit den gasförmigen Reaktionsprodukten (z.B. HCl), den Inertgasen und den nicht umgesetzten Reaktanden und gelangen direkt in einen Rückblasfilter (10), in dem sie abgeschieden werden. Der Rückblasfilter (10) wird bei Temperaturen zwischen 300°C und 1000°C betrieben, wodurch die Adsorption der Gase, insbesondere der nichtinerten Gase wie HCl und $NH_3$, an der sehr großen Oberfläche dieser Pulver auf einem niedrigen Niveau gehalten wird. Außerdem wird die Bildung von $NH_4Cl$ aus überschüssigem $NH_3$ (bei der Herstellung von Metallnitriden) und HCl unterbunden. In einem anschließenden Behälter (11) werden die Reste der adsorbierten Gase auf den Pulvern durch bevorzugt wechselweises Anlegen von Vakuum und Fluten mit verschiedenen Gasen bei 300°C bis 1 000°C weiter reduziert. Gute Wirkungen werden erzielt, wenn Gase wie $N_2$, Ar oder Kr eingesetzt werden. Besonders bevorzugt wird $SF_6$ eingesetzt.

Nach diesem Verfahren ist auch die Herstellung metastabiler Stoffsysteme und Partikel mit Kern/Mantel-Strukturen möglich. Dabei werden metastabile Stoffsysteme durch Einstellung sehr hoher Abkühlgeschwindigkeiten im unteren Teil des Reaktors erhalten.

Die Partikel mit Kern/Mantel-Struktur werden erhalten, indem im unteren Teil des Reaktors zusätzliche Reaktionsgase eingebracht werden.

Aus dem Evakuierbehälter (11) gelangen die Pulver in den Abkühlbehälter (12), bevor sie durch die Schleuse (13) in den Sammel- und Versandbehälter (14) gelangen. In dem Abkühlbehälter (12) können durch Einblasen verschiedener Gas/Dampfgemische die Partikeloberflächen in definierter Weise oberflächenmodifiziert werden.

Als Werkstoff für diejenigen Bauteile, die Temperaturen bis 2000°C und mehr ausgesetzt sind, wie Wärmetauscher (2) und (3), Düse (5), Reaktor (4) und Reaktorhüllrohr (15), kann bevorzugt beschichteter Graphit, insbesondere Feinkorngraphit, eingesetzt werden. Eine Beschichtung kann z.B. erforderlich sein, wenn die notwendige chemische Beständigkeit des Graphits gegen die eingesetzten Gase wie Metallchloride, HCl, $H_2$, $NH_3$ und $N_2$, bei den gegebenen Temperaturen nicht ausreichend ist oder wenn die Erosion bei höheren Strömungsgeschwindigkeiten (0,5-50 m/sec) ganz erheblich ist oder wenn die Gasdichtigkeit des Graphits dadurch erhöht werden kann oder wenn die Oberflächenrauhigkeit der Reaktorbauteile damit herabgesetzt werden kann.

Als Schichten können z.B. SiC, $B_4C$, TiN, TiC und Ni (nur bis 1200°C) eingesetzt werden. Auch Kombinationen verschiedener Schichten, z.B. mit "arteigener" Deckschicht, sind möglich. Diese Schichten können vorteilhaft mittels CVD, Plasmaspritzen und Elektrolyse (Ni) aufgebracht werden.

Wenn nur niedrige Temperaturen notwendig sind, ist auch der Einsatz metallischer Werkstoffe möglich.

Zur Einstellung der Partikelgrößen der Pulver können gleichzeitig drei Vorgehensweisen eingesetzt werden:

- Einstellen eines bestimmten Verhältnisses der Reaktions- und Inertgase.

- Einstellen eines bestimmten Druckes.

- Einstellen eines bestimmten Temperatur-Verweilzeit-Profils längs der Reaktorachse.

Das Temperatur-Verweilzeit-Profil wird wie folgt eingestellt:

- Durch zwei oder mehrere Heizzonen vom Beginn der Gasvorwärmer (2) bis zum Ende des Rohrreaktors (4).

- Durch Variation des Reaktorquerschnitts entlang seiner Längsachse.

- Durch Variation der Gasdurchsätze und damit bei vorgegebenem Reaktorquerschnitt der Strömungsgeschwindigkeiten.

Ein wesentlicher Vorteil der Variierbarkeit des Temperatur-Verweilzeit-Profils ist die Möglichkeit der Entkopplung der Keimbildungszone von der Keimwachstumszone. Damit ist es möglich, für die Herstellung "gröberer" Pulver (z.B. der Bereich ~ 0,1 μm bis ~ 0,5 μm) bei sehr niedriger Temperatur und kleiner Verweilzeit (d.h. kleiner Reaktorquerschnitt für eine bestimmte Länge) die Bildung von nur wenigen Keimen zuzulassen, die dann bei hoher Temperatur und großer Verweilzeit (großer Reaktorquerschnitt) zu "groben" Partikeln aufwachsen können. Ebenso ist es möglich, "feine" Pulver (z.B. der Bereich ~ 3 nm bis ~ 50 nm) herzustellen: in einem Bereich hoher Temperatur und relativ langer Verweilzeit wird die Bildung sehr vieler Keime erreicht, die im weiteren Reaktor bei niedrigen Temperaturen und kurzer Verweilzeit (kleiner Reaktorquerschnitt) nur noch gering aufwachsen. Die Einstellung sämtlicher Übergänge zwischen den hier qualitativ dargestellten Grenzfällen ist möglich.

Im Abkühlbehälter (12) ist durch Einblasen eines geeigneten Gas-/Dampf-Gemisches eine Passivierung der z.T. sehr luftempfindlichen bis pyrophoren Pulver möglich. Die Partikeloberflächen dieser Pulver können sowohl mit einer Oxidschicht definierter Dicke als auch mit geeigneten organischen Verbindungen wie höhere Alkohole, Amine oder gleich Sinterhilfsmitteln wie Paraffine in einem inerten Trägergasstrom belegt werden. Die Beschichtung kann auch im Hinblick auf die Weiterverarbeitungsmöglichkeiten der Pulver durchgeführt werden.

Die Oxidschichten können z.B. mit einem definiert angefeuchteten Inertgas-Luft-Strom als auch mit einem Inertgas/$CO_2$-Strom (vorzugsweise für Carbide geeignet) aufgebracht werden.

Die erfindungsgemäßen nanoskaligen Pulver eignen sich aufgrund ihrer mechanischen, elektrischen, optischen und magnetischen Eigenschaften für die Herstellung von neuartigen Sensoren, Aktoren, Farbsystemen, Pasten und Spiegel.

Im folgenden wird die Erfindung weiter beispielhaft erläutert, ohne daß hierin eine Einschränkung zu sehen ist.

Beispiel 1

GaN wurde gemäß der Reaktionsgleichung

$$GaCl_3 + NH_3 \rightarrow GaN + 3HCl$$

in einer Apparatur gemäß Fig. 1 hergestellt, wobei ein Überschuß an $NH_3$ und $H_2$ eingehalten wurde.

Hierzu wurden 100 g/min $GaCl_3$ (fest, Siedepunkt 201°C) in den Verdampfer 1a) dosiert, verdampft und gemeinsam mit 50 Nl/min $N_2$ auf 800°C erhitzt. Dieses Gasgemisch wurde in den Gasvorwärmer (2a) geleitet. Die Reaktionspartner $H_2$ (200 Nl/min) und $NH_3$ (95 Nl/min) wurden in den Gasvorwärmer (2) eingebracht. Die Reaktionspartner wurden getrennt voneinander auf eine Temperatur von etwa 1000°C vorerhitzt. Die Temperaturmessung erfolg te dabeimit einem W5Re-W26Re-Thermoelement (18) an der in Fig. 1 bezeichneten Stelle (1175°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsbeginns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 3,0 mm (in der Düsenlängsachse angeordnet) eine Karman'sche Wirbelstraße erzeugt. Das Reaktionsrohr hatte bei einer Gesamtlänge von 1100 mm am Düsenaustritt einen Innendurchmesser von 40 mm, 200mm unterhalb der Düse einen Innendurchmesser von 30 mm und am Ausgang 50 mm. Dabei wurde der Innenquerschnitt unter Beachtung der Strömungsgesetze stetig verändert. Das Reaktionsrohr (4) wurde aus 18 Segmenten zusammengesetzt, wobei die Segmente jeweils durch einen Distanz- und Zentrierring verbunden wurden. An diesen Stellen wurde jeweils ein Ringspalt (8) realisiert. Als Temperatur des Reaktionsrohres (4) wurde 1080°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 200 mbar Überdruck. Die Reaktorwand wurde durch 18 Ringspalte (8) hindurch mit 250 Nl/min Ar gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch den 6. Ringspalt von unten mit einer zusätzlichen Gaseinleitvorrichtung 200 Nl/min Ar in das Reaktionsrohr (4) eingeblasen. Das Produkt (GaN mit einer einheitlichen Partikelgröße von ~10 nm) wurde in dem Rückblasfilter (10) bei einer Temperatur von 600°C von den Gasen ($H_2$, $NH_3$, HCl, Ar, $N_2$) abgetrennt. Die Wahl dieser Temperatur erfolgte einerseits, um die Bildung von $NH_4Cl$ zu verhindern (>350°C), und andererseits, um die Primärbelegung der sehr großen Partikeloberflächen (~100 $m^2$/g) mit HCl auf einem niedrigen Niveau zu halten (~1,5 % Cl).

Das so hergestellte GaN wurde 60 min (d.h. 2850 g) im Rückblasfilter gesammelt, um dann in den Evakuierbehälter (11) überführt zu werden. In diesem Behälter wurden in einem Zeitraum von 50 min 8 Pump-Flutcyclen mit Endvakui von 0,1 mbar abs. durchlaufen. Der Behälter wurde jeweils mit Ar bis auf einen Druck von 3000 mbar abs. geflutet. Nach Ablauf von 50 min. wurde das so behandelte GaN-Pulver in den Abkühlbehälter (12) überführt. In diesem Behälter ist durch Einblasen verschiedener Gas-/Dampfgemische auch ein gezieltes Oberflächentailoring möglich. Nach Abkühlen des Pulvers auf <50°C wurde dieses ohne Kontakt mit der Außenluft durch die Schleuse (13) in den Sammelund Versandbehälter überführt.

Das pyrophore GaN-Pulver zeigte bei einer spezifischen Oberfläche von 98 $m^2$/g, nach BET, gemessen nach der $N_2$-1-Punkt-Methode (DIN 66 131), entsprechend 10 nm, eine extrem enge Kornverteilung.

Eine REM-Aufnahme dieses GaN-Pulvers mit einer spezifischen Oberfläche von 98 $m^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses GaN-Pulvers ergab einen Sauerstoffgehalt von 95 ppm und die Summe der nicht-oxidischen Verunreinigungen betrug 400 ppm.

**Patentansprüche**

1.  Feinteilige Metallverbindungspulver MeX, wobei

    Me =   Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd und

    X =    C, N, B, Si, Se, Te, P, O und S oder Kombinationen daraus, mit Ausnahme von AlN und $Al_2O_3$,

    dadurch gekennzeichnet, daß sie eine Partikelgröße zwischen 1,0 nm und 1000 nm aufweisen und weniger als 1 % der Einzelpartikel eine Abweichung von mehr als 40 % und keine Einzelpartikel eine Abweichung von mehr als 60 % von der mittleren Korngröße aufweisen.

2.  Pulver gemäß Anspruch 1, dadurch gekennzeichnet, daß weniger als 1 % der Einzelpartikel eine Abweichung von mehr als 20 % und keine Einzelpartikel eine Abweichung von mehr als 50 % von der mittleren Korngröße aufweisen.

3. Pulver gemäß einem der Ansprüche 1 oder 2, dadurch gekennzeichnet, daß weniger als 1 % der Einzelpartikel eine Abweichung von mehr als 10 % und keine Einzelpartikel eine Abweichung von mehr als 40 % von der mittleren Korngröße aufweisen.

4. Pulver gemäß einem oder mehreren der Ansprüche 1 bis 3, dadurch gekennzeichnet, daß die Partikelgröße von 1 nm bis kleiner 100 nm beträgt.

5. Pulver gemäß einem oder mehreren der Ansprüche 1 bis 3, dadurch gekennzeichnet, daß die Partikelgröße von 1 nm bis kleiner 50 nm beträgt.

6. Pulver gemäß einem oder mehreren der Ansprüche 1 bis 5, dadurch gekennzeichnet, daß die Metallverbindungen $Ga_xIn_yN_z$, $Al_xGa_yP$ und/oder PbSe sind.

7. Pulver gemäß einem oder mehreren der Ansprüche 1 bis 7, dadurch gekennzeichnet, daß sie einen Sauerstoffgehalt von weniger als 5.000 ppm aufweisen.

8. Pulver gemäß einem oder mehreren der Ansprüche 1 bis 8, dadurch gekennzeichnet, daß sie einen Sauerstoffgehalt von weniger als 1.000 ppm aufweisen.

9. Pulver gemäß einem oder mehreren der Ansprüche 1 bis 9, dadurch gekennzeichnet, daß sie einen Sauerstoffgehalt von weniger als 100 ppm, bevorzugt weniger als 50 ppm, aufweisen.

10. Pulver gemäß einem oder mehreren der Ansprüche 1 bis 10, dadurch gekennzeichnet, daß die Summe ihrer Verunreinigungen, mit Ausnahme der oxidischen Verunreinigungen, kleiner als 5.000 ppm beträgt.

11. Pulver gemäß einem oder mehreren der Ansprüche 1 bis 11, dadurch gekennzeichnet, daß die Summe ihrer Verunreinigungen, mit Ausnahme der oxidischen Verunreinigungen, kleiner als 1.000 ppm beträgt.

12. Pulver gemäß einem oder mehreren der Ansprüche 1 bis 13, dadurch gekennzeichnet, daß die Summe ihrer Verunreinigungen, mit Ausnahme der oxidischen Verunreinigungen, kleiner als 200 ppm beträgt.

13. Pulver gemäß einem oder mehreren der Ansprüche 1 bis 13, dadurch gekennzeichnet, daß sie in Mengen von mehr als 1 kg vorliegen.

## Claims

1. Fine powders of metal compounds MeX, wherein

   Me is   Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd and

   X is   C, N, B, Si, Se, Te, P, O and S or combinations thereof, with the exception of AlN and $Al_2O_3$,

   characterised in that they have a particle size of between 1.0 nm and 1000 nm and fewer than 1% of the individual particles have a deviation of more than 40% from the average particle size and no individual particle has a deviation of more than 60% from the average particle size.

2. Powders according to claim 1, characterised in that fewer than 1% of the individual particles have a deviation of more than 20% from the average particle size and no individual particle has a deviation of more than 50% from the average particle size.

3. Powders according to one of claims 1 or 2, characterised in that fewer than 1% of the individual particles have a deviation of more than 10% from the average particle size and no individual particle has a deviation of more than 40% from the average particle size.

4. Powders according to one or more of claims 1 to 3, characterised in that the particle size is from 1 nm to less than 100 nm.

5. Powders according to one or more of claims 1 to 3, characterised in that the particle size is from 1 nm to less than 50 nm.

6. Powders according to one or more of claims 1 to 5, characterised in that the metal compounds are $Ga_xIn_yN_z$, $Al_xGa_yP$ and/or PbSe.

7. Powders according to one or more of claims 1 to 7, characterised in that they have an oxygen content of less than 5,000 ppm.

8. Powders according to one or more of claims 1 to 8, characterised in that they have an oxygen content of less than 1,000 ppm.

9. Powders according to one or more of claims 1 to 9, characterised in that they have an oxygen content of less than 100 ppm, preferably of less than 50 ppm.

10. Powders according to one or more of claims 1 to 10, characterised in that the sum of their impurities, with the exception of the oxide impurities, is less than 5,000 ppm.

11. Powders according to one or more of claims 1 to 11, characterised in that the sum of their impurities, with the exception of the oxide impurities, is less than 1,000 ppm.

12. Powders according to one or more of claims 1 to 13, characterised in that the sum of their impurities, with the exception of the oxide impurities, is less than 200 ppm.

13. Powders according to one or more of claims 1 to 13, characterised in that they are available in quantities of more than 1 kg.

**Revendications**

1. Poudres fines de composés métalliques du type MeX dans lequel

Me = Al, Ga, In, Tl, Ge, Sn, Pb, As, Sb, Bi, Se, Te, Cu, Ag, Au, Zn, Cd, Hg, Pt, Pd, Ir, Rh, Ru, Os, Re, Y, La, Ce, Th, Pr, Nd, Sm, Eu, Gd et
X = C, N, B, Si, Se, Te, P, O et S ou une combinaison de ces éléments,

à l'exception de AlN et $Al_2O_3$,
    caractérisées en ce qu'elles ont une dimension de particule allant de 1,0 nm à 1000 nm, et moins de 1% des particules individuelles s'écarte de plus de 40% de la dimension de grain moyenne et aucune particule individuelle ne s'écarte de plus de 60% de la dimension de grain moyenne.

2. Poudres selon la revendication 1, caractérisées en ce que moins de 1% des particules individuelles s'écarte de plus de 20% et aucune particule individuelle ne s'écarte de plus de 50% de la dimension de grain moyenne.

3. Poudres selon une des revendications 1 ou 2, caractérisées en ce que moins de 1% des particules individuelles s'écarte de plus de 10% et aucune particule individuelle ne s'écarte de plus de 40% de la dimension de grain moyenne.

4. Poudres selon une ou plusieurs des revendications 1 à 3, caractérisées en ce que la dimension de particule va de 1 nm à moins de 100 nm.

5. Poudres selon une ou plusieurs des revendications 1 à 3, caractérisées en ce que la dimension de particules va de 1 nm à moins de 50 nm.

6. Poudres selon une ou plusieurs des revendications 1 à 5, caractérisées en ce que les composés métalliques sont $Ga_xIn_yN_z$, $Al_xGa_yP$ et/ou PbSe.

7. Poudres selon une ou plusieurs des revendications 1 à 7, caractérisées en ce que leur teneur en oxygène est inférieure à 5 000 ppm.

8. Poudres selon une ou plusieurs des revendications 1 à 8, caractérisées en ce que leur teneur en oxygène est inférieure à 1 000 ppm.

9. Poudres selon une ou plusieurs des revendications 1 à 9, caractérisées en ce que leur teneur en oxygène est inférieure à 100 ppm, de préférence inférieure à 50 ppm.

10. Poudres selon une ou plusieurs des revendications 1 à 10, caractérisées en ce que la somme de leurs impuretés, à l'exception des impuretés consistant en oxydes, est inférieure à 5000 ppm.

11. Poudres selon une ou plusieurs des revendications 1 à 11, caractérisées en ce que la somme de leurs impuretés, à l'exception des impuretés consistant en oxydes, est inférieure à 1 000 ppm.

12. Poudres selon une ou plusieurs des revendications 1 à 13, caractérisées en ce que la somme de leurs impuretés, à l'exception des impuretés consistant en oxydes est inférieure à 200 ppm.

13. Poudres selon une ou plusieurs des revendications 1 à 13, caractérisées en ce qu'elles existent en quantités supérieures à 1 kg.

Fig.1